(19) Europäisches Patentamt / European Patent Office / Office européen des brevets

(11) **EP 2 771 417 B1**

(12) **EUROPEAN PATENT SPECIFICATION**

(45) Date of publication and mention
of the grant of the patent:
**13.07.2016 Bulletin 2016/28**

(21) Application number: **12775029.7**

(22) Date of filing: **23.10.2012**

(51) Int Cl.:
**C09D 7/00** (2006.01)

(86) International application number:
**PCT/EP2012/070907**

(87) International publication number:
**WO 2013/060657 (02.05.2013 Gazette 2013/18)**

(54) **IMPROVED SOLVENT-FREE LOW ENERGY COATINGS**

VERBESSERTE LÖSUNGSMITTELFREIE NIEDERENERGIEBESCHICHTUNGEN

REVÊTEMENTS À BASSE ÉNERGIE AMÉLIORÉS SANS SOLVANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2011 EP 11186773**

(43) Date of publication of application:
**03.09.2014 Bulletin 2014/36**

(73) Proprietor: **Akzo Nobel Coatings International B.V.
6824 BM Arnhem (NL)**

(72) Inventors:
• **EMMETT, Simon Nicholas
Egham
Surrey TW20 0NS (GB)**
• **PEREZ-AMOROS, Javier
Reading
Berkshire RG1 3LJ (GB)**
• **WHEELER, Stephen Arthur
Slough
Berkshire SL1 2HP (GB)**
• **WOODS, Anthony David
Slough
Berkshire SL1 6NG (GB)**
• **LEDINGHAM, Katherine Mary
High Wycombe
Buckinghamshire HP13 7BB (GB)**
• **HORNY, Julie Anne
Windsor
Berkshire SL4 1RU (GB)**

(74) Representative: **Akzo Nobel IP Department
Velperweg 76
6824 BM Arnhem (NL)**

(56) References cited:
EP-A1- 1 978 063         EP-A1- 2 182 033
EP-A1- 2 386 609         EP-A1- 2 386 610
WO-A1-01/00712           WO-A1-2008/006474
WO-A1-2009/134538        WO-A2-2007/056070
DE-A1- 19 849 330        US-A1- 2008 245 273

**Description**

This invention relates to reduced energy content pigmented coating compositions which are free of volatile organic solvents, especially pigmented paints of low to medium sheen, also known as matt or soft sheen paints. In particular it relates to such paints having pigment volume content from 70 to 78% and having sheen of less than 30% when measured at 85°.

Light coloured pigmented paints usually contain high levels of titanium dioxide, $TiO_2$. This is because such pastel shades are predominantly white with a small amount of non-white colour added. Titanium dioxide is the best source of whiteness due to its

high refractive index relative to typical binders used in paints. Unfortunately, $TiO_2$ requires large amounts of energy to extract it from the ground and then purify. In fact, in known high pigment volume content (PVC) paints of pastel/light colour, for example matt whites and matt light shades as hereinbelow described, the high $TiO_2$ content (typically 10 to 20vol%) used to achieve the desired colour and opacity is the main contributor to the total energy content of the paint.

By energy content, we mean the energy required to extract, refine and manufacture the ingredients comprising the paint; and the energy required to manufacture the paint itself.

Since most energy is generated by burning fossil fuel, high energy content usually results in high carbon dioxide emissions - hence the use of the alternative measure 'embedded $CO_2$' to indicate the energy content.

The adverse effect of such emissions on the global environment, especially climate change, is generally accepted by most serious commentators. Thus there is a need to reduce the energy consumed in producing such paints.

One approach to this is to reduce the $TiO_2$ content of the paint. However, this simply reduces the opacity of the dried coating and, whilst each coat of dried paint may well have reduced energy content, additional coats will be required in order to achieve opacity. Consequently, any benefit is lost or at least, significantly diminished. Other approaches replace some or all of the $TiO_2$ with extender pigments such as chalk. Whilst such extenders require less energy than $TiO_2$ to extract and refine, the lower refractive index of such extenders is very close to the binders used in paint. As such, they do not scatter light as well as $TiO_2$ and in order to compensate for the reduced amount of $TiO_2$ more extender must be added to the paint to achieve the correct colour and opacity. However, this raises the PVC further, eventually to the extent that air is trapped in the dried paint film. Whilst this increases the opacity, it also results in poorer wet scrub resistance.

One possible way out of this dilemma is to use calcined clay as this has good opacity and is less detrimental to the scrub resistance. However, manufacture of calcined clay requires clay to be heated to 1000°C thereby consuming large amounts of energy. Clearly, this does not result in significant energy savings and is thus not a preferred option.

United States Patent US 4,277,385 discloses volatile organic solvent containing paint compositions having PVC between 75 and 85% and further teaches that to avoid cracking in high PVC paint films, the formulation should be free of non-opacifying inorganic pigments (another name for extenders) essentially replacing them with non-film forming solid polymer particles. However, no attempt is made to minimise the $TiO_2$ content in these formulations and, thus the problem of high energy content and high $CO_2$ emissions are not addressed.

European Patent application EP 0113435 describes an aqueous paint having reduced $TiO_2$ content at PVC from 20 to 80%. It teaches to use mixtures comprising pigmented vesiculated polymer beads and larger opaque polymer particles having microvoids but no pigments, to replace $TiO_2$ whilst maintaining burnish/scrub resistance. However, as pointed out in that application, pigmented vesiculated polymer beads themselves contain $TiO_2$ and thus add considerably to the $TiO_2$ content. This does little, if anything, to reduce the total energy content of the paint. Pigmented vesiculated polymer beads are polymer particles containing both and $TiO_2$ microvoids. Known such coatings contain volatile organic solvents.

Increasingly, consumers and legislators across the word require that the amount of volatile organic solvent in coating compositions is kept to a minimum or the compositions are free of such solvents. This is a significant problem in coating compositions which have sufficient binder to fill the voids between the non-film forming components ie at or below the critical PVC. It is a very major problem when dealing with coating compositions of high PVC, as in the present invention.

Thus, there is a need for improved paint compositions having reduced $TiO_2$ content and thus low energy content whilst also having good opacity and good wet scrub resistance and which are also free of volatile organic solvents.

Accordingly, there is provided an aqueous pigmented coating composition having a PVC of from 70 to 78% comprising, based on the total volume solids of the dry coating unless otherwise stated,

a) opacifying pigment particles comprising

i) from 4 to 10% titanium dioxide
ii) from 0 to 20% of hollow polymeric particles

b) non-opacifying extender particles comprising

    i) calcium magnesium carbonate and/or
    ii) calcium carbonate and/or
    iii) nepheline syenite and/or
    iv) kaolin

wherein i)+ii)+iii)+iv) = 40 to 75% and iv) is 0 to 45%

c) styrene-acrylic polymer binder particles of calculated Fox Tg of from -30 to 5°C having an acid value of from 15 to 65mg KOH/g of polymer and wherein the polymer particles are derived from acrylic monomers optionally further comprising derivatives of styrene

d) dispersant which is insoluble in water at pH 3

wherein the composition is free of volatile organic solvent

Preferably, the composition is free of non-volatile coalescing solvent.

Coalescing solvents are solvents, usually organic, which enable the polymer binder particles to form a film at temperatures lower than they normally would. They do this by reducing the effective Tg of the polymer (which can be determined by measurement). Without wishing to be bound by this, it is thought that coalescing solvents plasticise and soften at least the outer regions of polymer binder particles enabling said particles to merge as the aqueous phase evaporates.

Preferably the pigment volume content is from 71 to 78, more preferably from 72 to 78, even more preferably from 73 to 78%. Any difference between the actual PVC and the sum of a) and b) is made up with other non-opacifying extender pigments as defined hereinbelow.

Preferably, the opacifying pigment particles are white.

More preferably, the opacifying pigment particles consist of $TiO_2$ and hollow polymer particles. Even more preferably, the opacifying pigment particles consist of $TiO_2$ only. $TiO_2$ produced by the well known chloride process is preferred in this invention as it requires less energy to manufacture and thus introduces less embedded $CO_2$ to the coating.

The titanium dioxide is preferably in the rutile form as anatase is a less efficient scatterer and thus more is required to achieve the same degree of opacity.

Preferably the $TiO_2$ comprises 4 to 9, more preferably from 4 to 8, even more preferably from 5 to 8, still more preferably from 5 to 7 and most preferably from 6 to 7vol% of the composition.

Hollow polymeric, preferably spherical, particles may also be used to provide white opacity. Suitable such particles contain a void of from 30 to 50% by vol of the particle. Such particles are available as aqueous dispersions under the tradename Ropaque™. However, the composition preferably contains less than 10% by volume of such polymeric hollow sphere white pigments because they contribute significantly to the energy content of the paint. Additionally, they tend to provide unwanted gloss to the dried paint film following drying. More preferably, the composition is free of such hollow polymeric particles.

Similarly, calcined clay, a white pigment may be used as a partial replacement for $TiO_2$. However, since the production of calcined clay is itself energy intensive, care must be taken to limit the amount of calcined clay used in the formulation. To take maximum advantage of the energy savings to be made it is preferred that the coating composition is free of calcined clay. Nevertheless, preferably, up to 30vol% of calcined clay may be used, more preferably from 5 to 20vol% and most preferably from 10 to 15vol%. Pigmented vesiculated polymer beads are also preferably avoided.

Of course, coloured opacifying pigments of different hue may also be added to the compositions of the present invention, in addition to the other opacifying pigment particles, to produce pastel/light colours as discussed in greater detail hereinbelow.

By non-opacifying extender particles is meant inorganic particles that have a refractive index the same as or similar to that of the polymer binder. Since the opacifying strength of a particulate material is a consequence of the difference in refractive index of the material and the medium in which it is dispersed and its particle size, such extenders are regarded essentially as non-opacifiers, see page 35 to 37, Paint and Surface Coatings - theory and practice edited by R.Lambourne and published by John Wiley and Sons. That is not to say that they do not contribute to opacity at all but rather that any contribution is small in comparison to $TiO_2$.

Extenders are usually not pure white and can provide some grey or yellow hue to the coating.

Suitable examples of non-opacifying extender particles include calcium magnesium carbonate, calcium carbonate, nepheline syenite, kaolin, talc, silica, diatomaceous silica, mica and calcium sulphate. Preferably, the non-opacifying extender particles are selected from the group consisting of calcium magnesium carbonate, calcium carbonate, nephelene syenite and kaolin. Preferably, the non-opacifying extender particles are selected from the list consisting of calcium magnesium carbonate, calcium carbonate, nephelene syenite and kaolin. Even more preferably they are selected from the group consisting of calcium magnesium carbonate, calcium carbonate and kaolin.

The mineral known as dolomite is a convenient and cost effective source of calcium magnesium carbonate, $CaMg(CO_3)_2$. Dolomite is a preferred source of calcium magnesium carbonate for use in the present invention. It is available in powder form of differing mean particle sizes.

Suitable forms of calcium carbonate include calcite including precipitated calcite. Socal P3 is an example of suitable precipitated calcium carbonate, in the form of calcite. A suitable ground calcium carbonate is Omyacoat 850 OG.

Nepheline syenite can be used to partly or wholly replace the calcium carbonate

Kaolin, $Al_2Si_2O_5(OH)_4$, is a type of clay. Adding kaolin above 45vol% to the composition (based on the dry coating) results in poor wet scrub resistance. Furthermore, at such high levels of kaolin, the coating viscosity is too high to allow easy application using conventional application techniques-such as rollers or brushes- and allow the paint to flow to produce an acceptably smooth finish. Advantageously, the amount of kaolin should be from 0.5 to 45, more preferably from 5 to 35, even more preferably from 10 to 35 and most preferably from 15 to 30vol%.

Preferably, the non-opacifying extender particles comprise from 50 to 75, more preferably from 50 to 70 and most preferably from 55 to 65vol% of the dry coating.

Advantageously, from 20 to 50% of the total volume solids of the dry coating should comprise extender particles having mean particle size $d_{50}$ of ≤2 microns. This ensures that the $TiO_2$ particles are sufficiently spaced apart so that scattering is efficient and therefore opacity optimised.

The particle sizes of the extenders are quoted as d50 diameters. This means that 50% of the particles by volume are below this diameter.

For simplicity, the word 'polymer' in this specification is used to cover copolymers, comprising two or more monomer types.

The binder comprises an aqueous dispersion of styrene-acrylic polymer binder particles, often referred to as latex. More preferably, such dispersions are made using emulsion polymerisation methods.

The styrene-acrylic polymer is a copolymer of styrene and/or its derivatives and acrylic monomers.

Suitable such styrene derivatives include α-methyl styrene and vinyl toluene. However, styrene is preferred over the derivatives. Preferably, the styrene level should be at least 20wt% by weight of the polymer.

Suitable acrylic monomers include alkyl esters of acrylic or methacrylic acid such as methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate, decyl acrylate, benzyl methacrylate, isobutyl methacrylate, isobornyl methacrylate the hydroxyalkyl esters of the same acids such as 2-hydroxyethyl acrylate, 2-hydroxyethyl methacrylate, and 2-hydroxypropyl methacrylate.

Even more preferred are polymer binders derived from styrene, butyl acrylate and a copolymerisable acid. Most preferably, the copolymerisable acid is acrylic acid and/or methacrylic acid.

Preferably the binder level of the coating is from 5 to 20%, more preferably 5 to 15 and most preferably from 8 to 15% calculated on volume solids.

The acid value of the polymer is preferably from 15 to 60, more preferably from 15 to 55, even more preferably from 15 to 45 and most preferably from 16 to 30mg KOH/g non-vol polymer. Below an acid value of 15mg KOH/g polymer produces dried paint of poorer wet scrub resistance, whilst above 65 mg KOH/g polymer tends to degrade the wet scrub resistance of the dried paint.

The acid value is varied by copolymerising acid functional monomers into the polymer comprising the particles. Suitable such monomers include acrylic acid, methacrylic acid and maleic acid or its anhydride. Preferably, the acid used is acrylic acid.

Polymers of mean particle size no more than 0.3 μm are preferred as they are better at binding together the particulate components of the composition.

Preferably the number average mean particle size of the polymer particles is from 0.05 to 0.30 μm, more preferably from 0.07 to 0.15 μm and most preferably from 0.08 to 0.14 μm. The number refers to the diameter of the particles. The smaller particle size is preferred as it results in improved scrub resistance, which is particularly important at the high PVC of the present invention.

The glass transition temperature, Tg, of the polymer binder can be adjusted by the choice of monomers and the relative amounts of each comprising the polymer. The Tg range of from -30 to 5°C is essential as above the upper limit the wet scrub resistance is unacceptable and below -30°C the energy content is unacceptably high in the styrene-acrylic polymers. Preferably, the Tg of the binder is from -25 to 0°C, more preferably from -20 to 0°C, even more preferably from -20 to -5°C,.

For the avoidance of doubt, any reference to Tg in this specification is to calculated Fox Tg unless otherwise stated.

Pigment dispersants generally comprise a hydrophilic portion and a hydrophobic portion and, depending on the nature of the dispersing medium and the pigment surface, one portion will have a greater affinity for the pigment surface and the other portion for the dispersing medium. In this way a stable dispersion of pigment dispersed in the medium can be produced.

In the present invention, the dispersant is required to disperse and stabilise the non-polymeric opacifying pigments (including any colour pigments) and non-opacifying extender particles.

We have found that dispersants suitable for use in the present invention are predominantly hydrophobic. An existing scale, the HLB scale, is a measure of the hydrophilic-lipophilic balance of a dispersant. Unfortunately, the method used to determine HLB is time-consuming and complicated. We have devised a simple test to determine whether or not a candidate dispersant is suitable for use in the present invention. We have found that suitable dispersants are those which are insoluble in acidified demineralised water at pH 3 at a concentration of 0.5wt%. A simple test is described hereinbelow to enable the identification of suitable dispersants.

Dispersants which do not satisfy this requirement produce dried films which are unacceptable for wet scrub resistance.

Suitable dispersants include Orotan 731 and 2002 (both available from Dow), Coadis 123K (available from Coatex Inc), Sokolan CP9 (available BASF), Hydropalat 34 (available from Cognis) and Anti Terra 250 (available from BYK). More preferably, the dispersant is selected from the group comprising or consisting of Orotan 730 and 2002, Coadis 123K, Sokolan CP9 and Hydropalat 34.

Preferably the composition contains less than 2.5 vol% of carboxy methyl cellulose thickener, more preferably less than 1.5 vol%, even more preferably less than 1.0 vol% and most preferably it is free of carboxy methyl cellulose thickener.

Preferably, the weight average molecular weight of the dispersant is at least 3500, more preferably 4500 and most preferably 6000 Daltons. The upper limit of the weight average molecular weight is preferably 50000 Daltons, more preferably 40000, even more preferably 30000, still more preferably 20000 and most preferably 15000 Daltons. The most preferred average molecular weight of the dispersant is from 3500 to 20000 Daltons.

Whilst the amount of the dispersant required can be determined by routine experimentation a version of the Daniel Flow point method can be used to estimate the required amount.

A suitable method to estimate the dispersant demand includes the following steps;i) gradually add dispersant to an aqueous dispersion of the non-polymeric opacifying pigment (including any colour pigments) and extender particles and monitor the viscosity of the resulting mixture to determine the minimum viscosity and ii) identify the minimum amount of dispersant added to reach the minimum viscosity as the dispersant demand.

An even more preferred method is described in the test procedures.

The non-ionic synthetic associative thickener (NSAT), hydrophobically modified alkali swellable emulsion (HASE), associative thickeners (ASST) and hydrophobically modified ethoxylated urethane thickeners (HEUR) type thickeners are preferred over the cellulosic types. More preferably, the coating composition is free of cellulose cellulose based thickeners.

Pastel colours are usually produced by adding small amounts of various colour pigments, in the form of a concentrated dispersion (also known as colorants or tinters), to a white paint.

The benefits of the invention are advantageously achieved in coloured coating compositions normally requiring high levels of $TiO_2$. Such colours are the greys and lightly coloured coatings, often referred to as pastel or light colours, and of course, the whites.

These, and all colours, can be defined using the well known Y, C*, h* system. In the system, any colour can be represented by

> i. its hue, depicted by h*
> ii. its chroma, C*,
> iii. its light reflectance value, Y

These terms are defined scientifically by the Commission Internationale de l'Eclairage (CIE) [see 'International Lighting Vocabulary', 4th Edition, published IEC/CIE 017.4-1987. ISBN 978 3 900734 07 7].

For the avoidance of any doubt, any reference to coating colour in this specification is to the colour of the coating when dry, unless otherwise stated.

Hue is a measure of how close the colour is to red, yellow, green and blue. It is depicted by hue angle ranging from 0 to 360° where the angle defines the position of the hue in colour space, where red, yellow, green and blue are at angles of 0, 90, 180 and 270° respectively. Angles between these 'cardinal points' indicate intermediate colours eg a hue angle of 45° is a reddish yellow (orange) colour.

Chroma is a measure of colour intensity, ie the extent to which it is either a pastel/ light colour or a strong colour or something in between. Chroma can take values from 0 to 100 with the higher numbers indicating stronger colours. Colours having a chroma value of 0 are 'neutral' greys lying on an axis from black to white.

The light reflectance value is a measure of the perceived lightness of the colour, ranging from 0 to 100, with 0 representing black and 100 white.

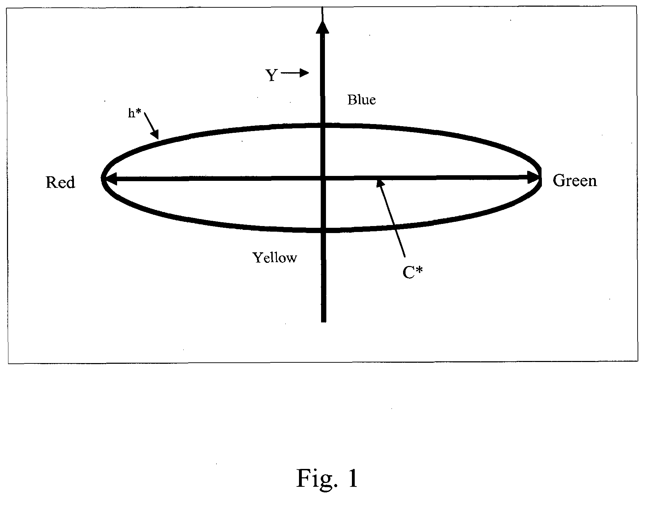

Figure 1 shows a simplified representation of the Y, C*, h* system. It shows a slice of colour space at about the mid point of the light reflectance value, Y, range. The Y axis runs from 0 to 100. Red, yellow, green and blue are shown in their appropriate positions on the hue, circle. The C* axis runs from zero at the origin to 100 at the perimeter. At each value of Y, further slices of hue are associated representing lighter and darker colours. At both the dark and the light end of the Y scale, the colours are less intense, and thus chroma is inevitably low. For this reason, colour space is often depicted as a sphere, although in truth it is more an irregular cylinder in shape.

Using the CIE notation, the grey or light coloured compositions which benefit most from the present invention, can be identified as those colours, including whites, satisfying the following criteria;

$$C^* < C_{critical} \qquad\qquad \text{equation 1}$$

$$Y > mC^* + 35 \qquad\qquad \text{equation 2}$$

where m and $C_{critical}$ take the values in Table 1 below.

Table 1

| Hue angle h* | M | $C_{critical}$ |
|---|---|---|
| 0 | 0.098 | 39.063 |
| 10 | 0.063 | 42.739 |
| 20 | 0.231 | 40.130 |
| 30 | 0.399 | 37.522 |
| 40 | 0.498 | 37.444 |
| 50 | 0.579 | 38.000 |
| 60 | 0.655 | 39.500 |
| 70 | 0.732 | 41.000 |
| 80 | 0.793 | 45.286 |
| 90 | 0.854 | 49.571 |
| 100 | 0.803 | 47.136 |
| 110 | 0.740 | 43.955 |
| 120 | 0.663 | 41.727 |
| 130 | 0.580 | 39.909 |
| 140 | 0.498 | 38.565 |
| 150 | 0.416 | 37.696 |
| 160 | 0.346 | 37.381 |
| 170 | 0.318 | 39.586 |
| 180 | 0.283 | 40.850 |
| 190 | 0.190 | 39.350 |
| 200 | 0.101 | 38.000 |
| 210 | 0.060 | 38.000 |
| 220 | 0.021 | 38.333 |
| 230 | -0.007 | 40.000 |
| 240 | -0.041 | 40.314 |

(continued)

| Hue angle h* | M | C$_{critical}$ |
|---|---|---|
| 250 | -0.083 | 38.600 |
| 260 | -0.125 | 36.886 |
| 270 | -0.167 | 35.171 |
| 280 | -0.152 | 34.640 |
| 290 | -0.131 | 34.240 |
| 300 | -0.079 | 34.000 |
| 310 | 0.016 | 34.000 |
| 320 | 0.112 | 34.000 |
| 330 | 0.207 | 34.000 |
| 340 | 0.235 | 34.471 |
| 350 | 0.161 | 35.647 |
| 360 | 0.098 | 39.063 |

Above the C$_{critical}$ value the colour intensity is too high to be perceived as a pastel colour.

The values of m and C$_{critical}$ at intermediate hue angles can be calculated by linear interpolation.

The table enables the calculation of C* and Y for any given hue and thus the whites, grey or pastel/light shades are explicitly identified.

Coatings having chroma, C* less than about 5 and a Y value more than 95 are perceived by the human eye as white.

The values of C*, Y and h* of any colour may be calculated from the spectral reflectance curve of the colour, measured using a spectrophotometer in accordance with the manufacturers instructions. A suitable spectrophotometer is the Datacolor Spectraflash SF 600.

Preferably, the dried coating compositions of the invention satisfy equations 1 and 2. More preferably, the dried coating compositions have a chroma less than 5 and a Y value greater than 85.

Preferably, the gloss value of the dried coating is less than 30%,when measured at 85°, more preferably less than 20%, even more preferably less than 10%, yet more preferably less than 5% and most preferably from 2 to 8%.

The coating composition may also contain other ingredients that are standard for coatings such as waxes, rheological modifiers, surfactants, anti-foams, tackifiers, plasticisers, crosslinking agents, flow aids, biocides and clays.

In another aspect of the invention there is provided a method of coating an article or structure having a surface with a composition according to the present invention including the steps of applying at least one liquid layer of the coating by brush, roller, pad or spray and allowing or causing the layer to dry and/or harden.

In a further aspect of the invention there is provided an article or structure having a surface coated with a composition according to the present invention.

The following ingredients were used in preparing the examples.

Tiona™ 595 is a Rutile form of TiO$_2$ (density of 4.05g/cm$^3$) available from Cristal. Microdol™ H200 and H600 are both dolomites (density of 2.85g/cm$^3$) and are available from Omya. Omya House, Derby, United Kingdom ASP170 (density 2.60g/cm$^3$) is available from BASF.

Ropaque™ Ultra E is a 30% non-vol dispersion of hollow polymeric spherical particles (density of 0.591g/cm$^3$) and is available from Rohm and Haas, Philadelphia, USA (Dow).

Orotan™ 731 A is a pigment dispersing agent (25wt% non-vol; density of non-vol is 1 g/cm$^3$) available from Rohm & Haas Philadelphia, USA (Dow).

Disponil™ A1580 is a surfactant (80wt% non-vol; density of non-vol is 1.00 g/cm$^3$) and is available from Cognis Deutschland GmbH & Co. KG. PO Box 130164, Germany.

Dispex N40 is a dispersant available from Ciba (BASF).

Dispelair™ CF 823 is a defoamer (60wt% non-vol; density of non-vol is 1.00g/cm$^{-3}$) and is available from Blackburn Chemicals Ltd, Whitebirk Industrial Estate, Blackburn, United Kingdom.

Blanose™ 7M 31C is a carboxymethylcellulose thickener (density 1.59g/cm$^3$) available from Hercules GmbH, Dusseldorf, Germany.

Natrosol 250HBR is a HEC thickener available from Ashland.

Acticide CHR 0107 a biocide is available from Thor at Wincham Avenue, Wincham, Northwich, Cheshire, England.

Omyacoat 850OG is a carbonate (density 2.75/ cm$^3$) from Omya House, Derby, United Kingdom Latex 1 is a styrene/butyl acrylate/acrylic acid copolymer of Tg -10°C and Acid value 23.5mg KOH/g polymer and 50wt% solids content.

Latex 2 is a styrene/butyl acrylate/acrylic acid copolymer of Tg +10°C and Acid Value 23.5mg KOH/g polymer and 50wt% solids content.

The following test methods were used:

Molecular Weight of Dispersant

Aqueous GPC was used set up was used to measure molecular weight.

The equipment and conditions used were;

Columns: 2 x 30cm TSK GMPWXL GPC columns from Tosoh
Eluent: 0.3M Sodium Nitrate, 0.01M Sodium Phosphate with pH adjusted to 7.5 using 0.1M NaOH
Flow rate: 1.0 ml/min
Detector; Waters 410 differential refractive index detector.
Software; Waters Millennium 32 v3.05.01

The instrument was calibrated with Dextran standards covering the range 342 - 401000 g/mol.

Samples were prepared by diluting 0.1 g in 10 mls of eluent and filtering through a 0.45 micron PVDF membrane.

Injection Volume was 100μl

Opacity (Contrast Ratio)

Opacity was measured in accordance with BS 3900-D4.

At least 90% is considered acceptable.

The measured opacity is not linear in its relationship to how the eye perceives opacity.

Thus, small differences in measured opacity are seen by the eye as much larger differences.

Gloss

Gloss was measured in accordance with BS EN ISO 2813, BS 3900-D5.

Wet Scrub Resistance

Scrub resistance of the dried film was measured in accordance with BS EN ISO 11998 using 200 cycles with the modification that the loss was recorded as mg/cm$^2$. A loss of less than 6mg/cm$^2$ removal is acceptable.

High Shear Viscosity

The high shear viscosity is measured at 25°C using an ICI Cone and Plate viscometer (available from Research Equipment London Ltd, London, TW2 5NX) operating at 10,000s$^{-1}$.

Rotothinner viscosity (Paint)

The medium shear viscosity is measured at 25°C using a Rotothinner viscometer (available from Sheen Instruments Ltd, Kingston-upon-Thames, Surrey, UK) fitted with a standard disc rotor rotating at about 562rpm which is equivalent to a shear rate of ca 250 s$^{-1}$.

Particle Size of Extenders

Particle size of the extenders was measured using a Mastersizer in accordance with ISO 13323 part 1&2.

Method for identifying Dispersants

The method relies on the solubility of dispersant in acidified water, with the more hydrophobic dispersants being less soluble than hydrophilic ones. Dispersants need not be completely insoluble in that they precipitate; producing a haze which cannot be redissolved by stirring is evidence enough to identify a dispersant as sufficiently hydrophobic to be suitable for use in the invention.

The following method was used for the example dispersants in this patent.

1. Prepare a 0.5% solution of dispersant (by weight of non-volatile solids) in demineralised water.

2. Measure pH of the solution using a pH meter.

3. Observe the starting appearance of the solution

4. Add 1 molar hydrochloric acid drop-wise into the solution stirring well. Measure the change in pH after each addition and observe any change in the clarity of the solution.

5. Continue adding the acid until the pH is <3 and make a final observation on the appearance of the solution.

6. If the solution has gone hazy, or is precipitating out, then the dispersant is suitable for use in the present invention.

The data generated for example 4 and C is shown below where Orotan 731 passes the wet scrub test and Dispex N40 fails.

1 molar hydrochloric acid was used and this was added to the dispersant solutions using a glass Pasteur pipette drop-wise.

Method for determining dispersant demand

The basis of the test is to gradually add dispersant to an aqueous dispersion of the inorganic opacifying pigment and non-opacifying extender particles whilst measuring viscosity until a minimum viscosity is reached. The amount of dispersant added to achieve this viscosity expressed as wt% non-vol dispersant calculated on the weight of the particles is the dispersant demand. The amounts of the ingredients used are taken from the weight% formulation.

The following method was used to determine the dispersant demand:

1. To a 500 cm$^3$ laquered metal can arranged to be stirred with a high speed stirrer (HSD) fitted with a 40 to 50 mm blade add approximately 250g of water. The exact amount of water will depend on the formulation.

2. Add about 10 to 20wt% of the expected final amount of candidate dispersant- this may require a first titration to make an initial estimate of the dispersant demand in order to make a more accurate second determination.

3. Whilst stirring at about 200 rpm, add all of the ingredients other than opacifying pigments, non-opacifying extender particles, thickener, biocide and the binder, to the mixture in step 2.

4. Add the non-opacifying extender particles and the non-polymeric opacifying pigment and any coloured pigment. Increase the stirring during the addition to about 2500rpm or as required to maintain a vortex in the can. The solids of the mixture at this stage should be about 70wt%.

5. Measure the viscosity using a Rotothinner viscometer fitted with a ball rotor rotating at 562rpm. For convenience, the viscosity at this stage should be between 1.5 and 2.0 Pa.s. Some trial and error may be necessary to achieve this. If it is so high that it cannot be stirred, additional dispersant and/or water may be added.

6. Add more dispersant to the mixture and mix in using the HSD.

7. Repeat steps 5 and 6 until a minimum viscosity is reached

The minimum amount of non-vol dispersant required to reach the minimum viscosity is taken as the dispersant demand expressed as wt% dispersant calculated on the total weight of the inorganic opacifying pigments and the non-opacifying extender particles.

The candidate dispersant should be used at as high a non-vol content as possible to avoid viscosity drops as a result of simple dilution.

The Rotothinner viscometer (Ref. 455N/15) is available from Sheen Instruments, 2, Gatton Park Business Centre, Wells Place, Redhill, Surrey, RH1 3LG

The dispersant demand of Example 1 was determined using various dispersants. The actual recipe used was as follows:

|  | wt% |
|---|---|
| Water | 24.71 |
| Dispersant | as required |
| Disponil A1580 | 0.85 |
| Dispelair CF823 | 0.68 |
| Acticide CHR/Rocima 189 | 0.51 |

(continued)

|  | wt% |
| --- | --- |
| Microdol H600 | 11.56 |
| Omyacoat 850OG | 8.50 |
| ASP 170 | 21.76 |
| Microdol H200 | 19.72 |
| Tiona 595 | 10.71 |

The data generated for example 4 and C is shown below where Orotan 731 passes the wet scrub test and Dispex N40 fails.

1 molar hydrochloric acid was used and this was added to the dispersant solutions using a glass Pasteur pipette drop-wise.

| 0.5% Orotan 731 aqueous solution | | |
| --- | --- | --- |
| Drops of HCl added | pH measured | Appearance of solution |
| 0 | 11.40 | Clear |
| 2 | 9.00 | Clear |
| 4 | 4.70 | Hazy on acid addition, but mixed in |
| 5 | 4.35 | Hazy |
| 6 | 3.30 | Hazy |
| 7 | 2.60 | Hazy |

| 0.5% Dispex N40 aqueous solution | | |
| --- | --- | --- |
| Drops of HCl added | pH measured | Appearance of solution |
| 0 | 8.70 | Clear |
| 2 | 7.48 | Clear |
| 3 | 7.07 | Clear |
| 4 | 6.70 | Clear |
| 5 | 6.50 | Clear |
| 6 | 6.20 | Clear |
| 7 | 5.88 | Clear |
| 8 | 5.61 | Clear |
| 10 | 5.08 | Clear |
| 12 | 4.41 | Clear |
| 14 | 3.57 | Clear |
| 16 | 2.36 | Clear |
| 18 | 1.83 | Clear |

| 0.5% Coadis 123K aqueous solution | | |
| --- | --- | --- |
| Drops of HCl added | pH measured | Appearance of solution |
| 0 | 9.91 | Slightly hazy |
| 1 | 8.74 | Slightly hazy |

(continued)

| 0.5% Coadis 123K aqueous solution | | |
|---|---|---|
| Drops of HCl added | pH measured | Appearance of solution |
| 2 | 8.20 | Hazy |
| 3 | 7.78 | Hazy |
| 5 | 6.58 | Precipitate present |
| 7 | 2.40 | Precipitate present |

**Examples** of the Invention

The invention will now be illustrated by the following examples.

Numbered examples are of the invention and comparative examples are referenced with letters. In all cases the wt% formulation refers to the liquid paint and the vol% to the dried coating.

The following method was used to make the paints in each case.

Millbase stage

Using a 5 litre metal dispersion vessel, load the Water (1), Orotan or Dispex, Disponil, Acticide and half the amount of Dispelair. Place vessel under High Speed Disperser fitted with a saw tooth blade. Stir at slow speed so that no splashing is observed. Add Microdol H200 and H600, ASP170, Omyacoat 850OG and Tiona 595, run for 2 minutes at slow speed then add Natrosol250HBR or Blanose thickener. Over 5 minutes slowly increase the speed as the paint thickens. Unit should be running at approximately 2500 r.p.m. (depending on volume), but without splashing. Stir for a further 30minutes. Stop unit half way through to ensure no pigment has stuck to sides/base of vessel by hand stirring. Turn unit back on to high speed, after 30 minutes reduce to slow speed. Check the state of dispersion of the millbase for bits by brushing out on a card. If acceptable amount of bits, add Water (2) and run for a further 2minutes and then switch off the stirrer.

The total amount of water showed in the example formulation was in the ratio of: water (1) : water (2) : water (3) =45.5 : 30.3 : 24.2

Paint stage

Load Latex 1 into a suitably sized vessel and place under a stirrer fitted with a paddle blade.

Load Ropaque, the rest of the Dispelair, the Millbase prepared above, Water (3). Adjust the stirrer speed as the volume in the vessel increases, being careful to avoid splashing.

Stir for a further 15 minutes at low speed (approx 500 r.p.m)

Examples 1 and A

Examples 1 and A are essentially identical other than for the difference in PVC Comparative example A, at PVC 82.5, fails the wet scrub test.

| Example | 1 | | A | |
|---|---|---|---|---|
| | wt% (wet coating) | vol% (dry coating) | wt (% of wet coating) | vol% (dry coating) |
| Natrosol 250HBR | 0.70 | 2.40 | 0.60 | 2.14 |
| Orotan 731 | 0.23 | 0.16 | 1.00 | 0.74 |
| Disponil A1580 | 0.50 | 1.75 | 0.50 | 1.82 |
| Acticide CHR0107/ Rocima 189 | 0.30 | 0.10 | 0.30 | 0.10 |
| Dispelair CF823 | 0.40 | 1.10 | 0.40 | 1.15 |

(continued)

| Example | 1 | | A | |
|---|---|---|---|---|
| | wt% (wet coating) | vol% (dry coating) | wt (% of wet coating) | vol% (dry coating) |
| ASP 170 | 12.80 | 22.59 | 12.30 | 22.62 |
| Omyacoat 850OG | 5.00 | 8.34 | 5.10 | 8.87 |
| Microdol H600 | 6.80 | 11.14 | 8.20 | 14.00 |
| Microdol H200 | 11.60 | 18.67 | 12.00 | 20.13 |
| Ropaque (Tm) Ultra E | 4.00 | 9.33 | 4.00 | 9.73 |
| Water | 43.25 | 0.00 | 44.32 | 0.00 |
| Tiona 595 | 6.30 | 7.17 | 6.10 | 7.24 |
| Latex 1 | 8.12 | 17.24 | 5.18 | 11.46 |
| | | | | |
| Total | 100.00 | 100.00 | 100.00 | 100.00 |
| | | | | |
| Wet scrubs weight loss (mg/cm$^2$) | | 3.49 | | 13.35 |
| Contrast Ratio | | 95.30 | | 96.60 |
| Density (kg/L) | | 1.39 | | 1.41 |
| PVC (%) | | 77.25 | | 82.59 |
| vol% solids | | 30.39 | | 29.45 |

## Examples 2 and B

These are essentially identical other than the level of ASP 170 (kaolin). Comparative example B, at a kaolin level of 50vol% fails the wet scrubs test.

| | 2 | | B | |
|---|---|---|---|---|
| Example | wt% (wet coating) | vol% (dry coating) | wt (% of wet coating) | vol% (dry coating) |
| Natrosol 250HBR | 0.70 | 2.40 | 0.70 | 2.32 |
| Orotan 731 | 0.23 | 0.16 | 1.90 | 1.31 |
| Disponil A1580 | 0.50 | 1.75 | 0.50 | 1.69 |
| Acticide CHR0107/ Rocima 189 | 0.30 | 0.10 | 0.30 | 0.09 |
| Dispelair CF823 | 0.40 | 1.10 | 0.40 | 1.07 |
| ASP 170 | 12.80 | 22.59 | 29.00 | 49.51 |
| Omyacoat 850OG | 5.00 | 8.34 | 1.54 | 2.48 |
| Microdol H600 | 6.80 | 11.14 | 2.09 | 3.32 |
| Microdol H200 | 11.60 | 18.67 | 3.57 | 5.56 |
| Ropaque (Tm) Ultra E | 4.00 | 9.33 | 4.00 | 9.03 |
| Water | 43.25 | 0.00 | 41.58 | 0.0 |
| Tiona 595 | 6.30 | 7.17 | 6.30 | 6.94 |

(continued)

| Example | 2 | | B | |
|---|---|---|---|---|
| | wt% (wet coating) | vol% (dry coating) | wt (% of wet coating) | vol% (dry coating) |
| Latex 1 | 8.12 | 17.24 | 8.12 | 16.68 |
| | | | | |
| Total | 100.00 | 100.00 | 100.00 | 100.00 |
| | | | | |
| Wet scrubs weight loss (mg/cm$^2$) | | 3.49 | | 8.5 |
| Contrast Ratio | | 95.30 | | 98.23 |
| Density (kg/L) | | 1.39 | | 1.39 |
| PVC (%) | | 77.25 | | 76.83 |
| vol% solids | | 30.39 | | 31.28 |

**Examples 3 and C**

Examples 3 and C are identical except that the Tg of the latex in the two examples is different. Comparative example C, using a latex of Tg +10°C, fails the wet scrubs test.

| Example | 3 | | C | |
|---|---|---|---|---|
| | wt% (wet coating) | vol% (dry coating) | wt (% of wet coating) | vol% (dry coating) |
| Natrosol 250HBR | 0.70 | 2.40 | 0.70 | 2.40 |
| Orotan 731 | 0.23 | 0.16 | 0.23 | 0.16 |
| Disponil A1580 | 0.50 | 1.75 | 0.50 | 1.75 |
| Acticide CHR0107/ Rocima 189 | 0.30 | 0.10 | 0.30 | 0.10 |
| Dispelair CF823 | 0.40 | 1.10 | 0.40 | 1.10 |
| ASP 170 | 12.80 | 22.59 | 12.80 | 22.59 |
| Omyacoat 850OG | 5.00 | 8.34 | 5.00 | 8.34 |
| Microdol H600 | 6.80 | 11.14 | 6.80 | 11.14 |
| Microdol H200 | 11.60 | 18.67 | 11.60 | 18.67 |
| Ropaque (Tm) Ultra E | 4.00 | 9.33 | 4.00 | 9.33 |
| Water | 43.25 | 0.00 | 43.25 | 0.00 |
| Tiona 595 | 6.30 | 7.17 | 6.30 | 7.17 |
| Latex 1 | 8.12 | 17.24 | 0.00 | 0.00 |
| Latex 2 | 0.00 | 0.00 | 8.12 | 17.24 |
| | | | | |
| Total | 100.00 | 100.00 | 100.00 | 100.00 |
| | | | | |
| Wet scrubs weight loss (mg/cm$^2$) | | 3.49 | | 8.24 |

(continued)

| Example | 3 | | C | |
|---|---|---|---|---|
| | wt% (wet coating) | vol% (dry coating) | wt (% of wet coating) | vol% (dry coating) |
| Contrast Ratio | | 95.30 | | 95.90 |
| Density (kg/L) | | 1.39 | | 1.39 |
| PVC (%) | | 77.25 | | 77.25 |
| vol% solids | | 30.39 | | 30.39 |

**Examples 4 and D**

Effect of using Dispex N40, a hydrophilic dispersant

| Example | 4 | | D | |
|---|---|---|---|---|
| | wt% (wet coating) | Vol% (dry coating) | wt (% of wet coating) | vol% (dry coating) |
| Natrosol 250HBR | 0.70 | 2.40 | 0.70 | 2.39 |
| Dispex N40 (PAA) | 0.00 | 0.00 | 0.20 | 0.28 |
| Orotan 731 | 0.23 | 0.16 | 0.00 | 0.00 |
| Disponil A1580 | 0.50 | 1.75 | 0.50 | 1.74 |
| Acticide CHR0107/Rocima 189 | 0.30 | 0.10 | 0.30 | 0.10 |
| Dispelair CF823 | 0.40 | 1.10 | 0.40 | 1.10 |
| ASP 170 | 12.80 | 22.59 | 12.80 | 22.56 |
| Omyacoat 850OG | 5.00 | 8.34 | 5.00 | 8.33 |
| Microdol H600 | 6.80 | 11.14 | 6.80 | 11.13 |
| Microdol H200 | 11.60 | 18.67 | 11.60 | 18.65 |
| Ropaque (Tm) Ultra E | 4.00 | 9.33 | 4.00 | 9.32 |
| Water | 43.25 | 0.00 | 43.28 | 0.00 |
| Tiona 595 | 6.30 | 7.17 | 6.30 | 7.16 |
| Latex 1 | 8.12 | 17.24 | 8.12 | 17.22 |
| | | | | |
| **Total** | 100.00 | 100.00 | 100.00 | 100.00 |
| | | | | |
| Wet scrubs weight loss (mg/cm$^2$) | | 3.49 | | 10.50 |
| Contrast Ratio | | 95.30 | | 96.00 |
| Density (kg/L) | | 1.39 | | 1.39 |
| PVC (%) | | 77.25 | | 77.16 |
| vol% solids | | 30.39 | | 30.42 |

**Examples 5 and E**

Examples 5 and E show the effect of using a carboxymethylcellulose-type thickener which fails the wet scrub test.

| Example | 5 | | E | |
|---|---|---|---|---|
| | wt% (wet coating) | Vol% (dry coating) | wt (% of wet coating) | vol% (dry coating) |
| Natrosol 250HBR | 0.70 | 2.40 | 0.00 | 0.00 |
| Blanose 7M31C | 0.00 | 0.00 | 0.90 | 2.59 |
| Orotan 731 | 0.23 | 0.16 | 0.23 | 0.16 |
| Disponil A1580 | 0.50 | 1.75 | 0.50 | 1.74 |
| Acticide CHR0107/ Rocima 189 | 0.30 | 0.10 | 0.30 | 0.10 |
| Dispelair CF823 | 0.40 | 1.10 | 0.40 | 1.10 |
| ASP 170 | 12.80 | 22.59 | 12.80 | 22.54 |
| Omyacoat 850OG | 5.00 | 8.34 | 5.00 | 8.33 |
| Microdol H600 | 6.80 | 11.14 | 6.80 | 11.12 |
| Microdol H200 | 11.60 | 18.67 | 11.60 | 18.64 |
| Ropaque (Tm) Ultra E | 4.00 | 9.33 | 4.00 | 9.31 |
| Water | 43.25 | 0.00 | 43.05 | 0.00 |
| Tiona 595 | 6.30 | 7.17 | 6.30 | 7.16 |
| Latex 1 | 8.12 | 17.24 | 8.12 | 17.21 |
| | | | | |
| **Total** | 100.00 | 100.00 | 100.00 | 100.00 |
| | | | | |
| Wet scrubs weight loss (mg/cm$^2$) | | 3.49 | | 17.78 |
| Contrast Ratio | | 95.30 | | 95.40 |
| Density (kg/L) | | 1.39 | | 1.40 |
| PVC (%) | | 77.25 | | 77.09 |
| vol% solids | | 30.39 | | 30.52 |

**Example 6**

A coating free of hollow polymeric particles

| | 6 | | F | |
|---|---|---|---|---|
| Material Name | wt% (wet coating) | vol% (dry coating) | wt% (wet coating) | vol% (dry coating) |
| Natrosol 250HBR | 0.70 | 2.40 | 0.67 | 2.39 |
| Orotan 731 | 0.23 | 0.16 | 0.22 | 0.16 |
| Disponil A1580 | 0.50 | 1.75 | 0.48 | 1.74 |
| Acticide CHR0107/ Rocima 189 | 0.30 | 0.10 | 0.29 | 0.10 |

(continued)

| Material Name | 6 | | F | |
|---|---|---|---|---|
| | wt% (wet coating) | vol% (dry coating) | wt% (wet coating) | vol% (dry coating) |
| Dispelair CF823 | 0.40 | 1.10 | 0.38 | 1.10 |
| ASP 170 | 12.8 | 22.59 | 12.23 | 22.54 |
| Omyacoat 850OG | 5.00 | 8.34 | 5.97 | 10.41 |
| Microdol H600 | 6.80 | 11.14 | 8.12 | 13.90 |
| Microdol H200 | 11.60 | 18.67 | 13.85 | 23.29 |
| Ropaque (Tm) Ultra E | 4.00 | 9.33 | 0.00 | 0 |
| Water | 43.25 | 0.0 | 44.02 | 0 |
| Tiona 595 | 6.30 | 7.17 | 6.02 | 7.16 |
| Latex 1 | 8.12 | 17.24 | 7.76 | 17.21 |
| | | | | |
| Total | 100.00 | 100.00 | 100.00 | 100.00 |
| Wet scrubs weight loss (mg/cm$^2$) | | 3.49 | | 1.42 |
| Contrast Ratio | | 95.29 | | 94.94 |
| Density (kg/L) | | 1.39 | | 1.44 |
| PVC (%) | | 77.25 | | 77.30 |
| vol% solids | | 30.39 | | 30.04 |

**Claims**

1. An aqueous coating composition having a PVC of from 70 to 78% comprising, based on the total volume solids of the dry coating unless otherwise stared,

   a) opacifying pigment particles comprising

   i) from 4 to 10% titanium dioxide
   ii) from 0 to 20% of hollow polymeric particles

   b) non-opacifying extender particles comprising

   i) calcium magnesium carbonate and/or
   ii) calcium carbonate and/or
   iii) nepheline syenite and/or
   iv) kaolin

   wherein i)+ii)+iii)+iv) = 40 to 75% and iv) is 0 to 45%
   c) styrene-acrylic polymer binder particles having a calculated Fox Tg of from -30 to 5°C having an acid value of from 15 to 65mg KOH/g of polymer and wherein the polymer particles are derived from acrylic monomers and optionally further comprising derivatives of styrene
   d) dispersant which is insoluble in water at pH 3

   wherein the composition is free of volatile organic solvent.

2. A coating composition according to claim 1 wherein the composition is free of non-fugitive coalescing solvent.

EP 2 771 417 B1

3. A coating composition according to claim 1 or claim 2 wherein any difference between the actual PVC and the sum of a) and b) is made up with other non-opacifying extender particles.

4. A coating composition according to any one of the preceding claims wherein the opacifying pigments are white.

5. A coating composition according to any one of the previous claims wherein the polymeric hollow spheres comprise less than 10% by vol.

6. A coating composition according to any one of the previous claims wherein the extender particles are selected from the group consisting of calcium magnesium carbonate, calcium carbonate, nephelene syenite and kaolin.

7. A coating composition according to any one of the previous claims wherein the polymer binder has a calculated Fox Tg of from -25 to 0°C.

8. A coating composition according to any one of the previous claims wherein the polymer binder is derived from styrene, butyl acrylate and acrylic acid.

9. A coating composition according to any one of the previous claims wherein the binder comprises from 5 to 20% of the dried coating.

10. A coating composition according to any one of the preceding claims wherein the acid value of the polymer binder is from 15 to 60mg KOH/g of polymer.

11. A coating composition according to any one of the preceding claims wherein the dispersant demand is estimated by the following method or its equivalent; i) gradually adding dispersant to an aqueous dispersion of the non-polymeric opacifying pigment and extender particles and monitoring the viscosity of the resulting mixture to determine the minimum viscosity ii) identifying the amount of dispersant added to reach the minimum viscosity as the dispersant demand.

12. A coating composition according to any one of the preceding claims wherein the dispersant is selected from the group consisting of Orotan 731 and Orotan 2002, Coadis 123k, Sokolan CP9 and Hydropalat 34.

13. A coating composition according to any one of the preceding claims and further containing colour pigments.

14. A coating composition according to any one of the previous claims and having a colour when dry satisfying the criteria of

$$C^* < C_{critical}$$

and

$$Y > mC^* + 35$$

when calculated using m and $C_{critical}$ according to the table below

| Hue angle h* | m | $C_{critical}$ |
|---|---|---|
| 0 | 0.098 | 39.063 |
| 10 | 0.063 | 42.739 |
| 20 | 0.231 | 40.130 |
| 30 | 0.399 | 37.522 |
| 40 | 0.498 | 37.444 |

17

(continued)

| Hue angle h* | m | C$_{critical}$ |
|---|---|---|
| 50 | 0.579 | 38.000 |
| 60 | 0.655 | 39.500 |
| 70 | 0.732 | 41.000 |
| 80 | 0.793 | 45.286 |
| 90 | 0.854 | 49.571 |
| 100 | 0.803 | 47.136 |
| 110 | 0.740 | 43.955 |
| 120 | 0.663 | 41.727 |
| 130 | 0.580 | 39.909 |
| 140 | 0.498 | 38.565 |
| 150 | 0.416 | 37.696 |
| 160 | 0.346 | 37.381 |
| 170 | 0.318 | 39.586 |
| 180 | 0.283 | 40.850 |
| 190 | 0.190 | 39.350 |
| 200 | 0.101 | 38.000 |
| 210 | 0.060 | 38.000 |
| 220 | 0.021 | 38.333 |
| 230 | -0.007 | 40.000 |
| 240 | -0.041 | 40.314 |
| 250 | -0.083 | 38.600 |
| 260 | -0.125 | 36.886 |
| 270 | -0.167 | 35.171 |
| 280 | -0.152 | 34.640 |
| 290 | -0.131 | 34.240 |
| 300 | -0.079 | 34.000 |
| 310 | 0.016 | 34.000 |
| 320 | 0.112 | 34.000 |
| 330 | 0.207 | 34.000 |
| 340 | 0.235 | 34.471 |
| 350 | 0.161 | 35.647 |
| 360 | 0.098 | 39.063 |

15. A coating composition according to any one of the preceding claims and having a sheen of less than 15% when measured at 85°.

16. A method of coating an article or structure having a surface with a composition as defined in any one of the preceding claims including the steps of applying at least one liquid layer of the coating by brush, roller, pad or spray; allowing or causing the layer to dry and/or harden.

17. An article or structure having a surface coated with a composition as defined in any one of claims 1 to 15.

**Patentansprüche**

1. Wässrige Beschichtungszusammensetzung mit einer PVC von 70 bis 78% umfassend, basierend auf den Gesamtfeststoffen der trockenen Beschichtung, wenn nichts anderes angegeben ist,

    a) opazifizierende Pigmentpartikel umfassend

        i) von 4 bis 10% Titandioxid
        ii) von 0 bis 20% hohle Polymerpartikel

    b) nicht opazifizierende Extender-Partikel umfassend

        i) Kalzium-Magnesiumkarbonat und/oder
        ii) Kalziumkarbonat und/oder
        iii) Nephelin-Syenit und/oder
        iv) Kaolin

    wobei i)+ii)+iii)+iv) = 40 bis 75% und iv) 0 bis 45% ist
    c) Styrol-Acryl-Polymerbinderpartikel mit berechnetem Fox Tg von -30 bis 5°C mit einer Säurezahl von 15 bis 65 mg KOH/g Polymer und wobei die Polymerpartikel aus Acrylmonomeren stammen und wahlweise weiterhin Styrol-Derivate umfassen
    d) ein Dispergiermittel, das bei einem pH-Wert von 3 wasserunlöslich ist

    wobei die Zusammensetzung frei von flüchtigen organischen Lö sungsmitteln ist.

2. Beschichtungszusammensetzung nach Anspruch 1, wobei die Zusammensetzung frei von nicht flüchtigen koaleszierenden Lösungsmitteln ist.

3. Beschichtungszusammensetzung nach Anspruch 1 oder 2, wobei jede Differenz zwischen der tatsächlichen PVC und der Summe aus a) und b) mit anderen, nicht opazifizierenden Extender-Partikeln ergänzt ist.

4. Beschichtungszusammensetzung nach einem der vorhergehenden Ansprüche, wobei die opazifizierenden Pigmente weiß sind.

5. Beschichtungszusammensetzung nach einem der vorhergehenden Ansprüche, wobei die polymeren Hohlkugeln weniger als 10 Vol.% umfassen.

6. Beschichtungszusammensetzung nach einem der vorhergehenden Ansprüche, wobei die Extender-Partikel aus der Gruppe ausgewählt sind, bestehend aus Kalzium-Magnesiumkarbonat, Kalziumkarbonat, Nephelin-Syenit und Kaolin.

7. Beschichtungszusammensetzung nach einem der vorhergehenden Ansprüche, wobei der Polymerbinder einen berechneten Fox Tg von (minus) -25 bis 0°C hat.

8. Beschichtungszusammensetzung nach einem der vorhergehenden Ansprüche, wobei der Polymerbinder aus Styrol, Butylacrylat und Acrylsäure stammt.

9. Beschichtungszusammensetzung nach einem der vorhergehenden Ansprüche, wobei der Binder von 5 bis 20% der getrockneten Beschichtung umfasst.

10. Beschichtungszusammensetzung nach einem der vorhergehenden Ansprüche, wobei die Säurezahl des Polymerbinders von 15 bis 60 mg KOH/g Polymer beträgt.

11. Beschichtungszusammensetzung nach einem der vorhergehenden Ansprüche, wobei der Dispergiermittelbedarf nach dem folgenden Verfahren oder seinem Äquivalent beurteilt wird; i) allmähliches Hinzufügen eines Dispergiermittels zu einer wässrigen Dispersion des nicht polymeren, opazifizierenden Pigmentes und der Extender-Partikel und Überwachen der Viskosität der resultierenden Mischung, um die Mindestviskosität zu bestimmen ii) Identifizieren der Menge an zugesetztem Dispergiermittel, um die Mindestviskosität als Dispergiermittelbedarf zu erreichen.

12. Beschichtungszusammensetzung nach einem der vorhergehenden Ansprüche, wobei das Dispergiermittel aus der Gruppe ausgewählt ist, bestehend aus Orotan 731 und Orotan 2002, Coadis 123k, Sokolan CP9 und Hydropalat 34.

13. Beschichtungszusammensetzung nach einem der vorhergehenden Ansprüche und weiterhin Farbpigmente enthaltend.

14. Beschichtungszusammensetzung nach einem der vorhergehenden Ansprüche mit einer Farbe, die die folgenden Kriterien erfüllt, wenn sie trocken ist

$$C^* < C_{critical}$$

und

$$Y > mC^* + 35$$

bei Berechnung unter Verwendung von m und $C_{critical}$ nach der nachstehenden Tabelle:

| Farbwinkel h* | m | $C_{critical}$ |
|---|---|---|
| 0 | 0,098 | 39,063 |
| 10 | 0,063 | 42,739 |
| 20 | 0,231 | 40,130 |
| 30 | 0,399 | 37,522 |
| 40 | 0,498 | 37,444 |
| 50 | 0,579 | 38,000 |
| 60 | 0,655 | 39,500 |
| 70 | 0,732 | 41,000 |
| 80 | 0,793 | 45,286 |
| 90 | 0,854 | 49,571 |
| 100 | 0,803 | 47,136 |
| 110 | 0,740 | 43,955 |
| 120 | 0,663 | 41,727 |
| 130 | 0,580 | 39,909 |
| 140 | 0,498 | 38,565 |
| 150 | 0,416 | 37,696 |
| 160 | 0,346 | 37,381 |
| 170 | 0,318 | 39,586 |
| 180 | 0,283 | 40,850 |
| 190 | 0,190 | 39,350 |
| 200 | 0,101 | 38,000 |
| 210 | 0,060 | 38,000 |
| 220 | 0,021 | 38,333 |

(fortgesetzt)

| Farbwinkel h* | m | $C_{critical}$ |
|---|---|---|
| 230 | -0,007 | 40,000 |
| 240 | -0,041 | 40,314 |
| 250 | -0,083 | 38,600 |
| 260 | -0,125 | 36,886 |
| 270 | -0,167 | 35,171 |
| 280 | -0,152 | 34,640 |
| 290 | -0,131 | 34,240 |
| 300 | -0,079 | 34,000 |
| 310 | 0,016 | 34,000 |
| 320 | 0,112 | 34,000 |
| 330 | 0,207 | 34,000 |
| 340 | 0,235 | 34,471 |
| 350 | 0,161 | 35,647 |
| 360 | 0,098 | 39,063 |

Hue angle - Farbwinkel

15. Beschichtungszusammensetzung nach einem der vorhergehenden Ansprüche mit einem Glanz von weniger als 15%, gemessen bei 85°.

16. Verfahren des Beschichtens eines Gegenstandes oder einer Struktur mit einer Oberfläche mit einer Zusammensetzung, wie in einem der vorhergehenden Ansprüche definiert, einschließlich der Schritte des Auftragens von mindestens einer Flüssigkeitsschicht der Beschichtung durch Pinsel, Rolle, Pad oder Spray; Trocknenlassen und/oder Aushärtenlassen der Schicht.

17. Gegenstand oder Struktur mit einer Oberfläche, die mit einer Zusammensetzung, wie in einem der Ansprüche 1 bis 15 definiert, beschichtet ist.

**Revendications**

1. Composition aqueuse de revêtement ayant une concentration pigmentaire volumique CPV allant de 70 à 78% comprenant, par rapport au volume total des matières solides du revêtement sec, sauf indication contraire,

  a) des particules de pigment opacifiant comprenant

    i) 4 à 10% de dioxyde de titane
    ii) 0 à 20% de particules polymères creuses

  b) des particules de matière de charge non opacifiante comprenant

    i) du carbonate de calcium et de magnésium et/ou
    ii) du carbonate de calcium et/ou
    iii) de la syénite néphélinique et/ou
    iv) du kaolin

  où i) + ii) + iii) + iv) = 40 à 75% et iv) varie de 0 à 45%
  c) des particules de liant polymère styrène-acrylique ayant une Tg de Fox calculée allant de -30 à 5°C ayant un indice d'acide allant de 15 à 65 mg de KOH/g de polymère et où les particules de polymère sont dérivées de monomères acryliques et comprenant en outre facultativement des dérivés de styrène
d) un dispersant qui est insoluble dans l'eau à un pH de 3
où la composition est exempte de solvant organique volatil.

2. Composition de revêtement selon la revendication 1, dans laquelle la composition est exempte de solvant coalescent non fugitif.

3. Composition de revêtement selon la revendication 1 ou 2, dans laquelle toute différence entre la CPV réelle et la somme de a) et b) est completée avec d'autres particules de matière de charge non opacifiante.

4. Composition de revêtement selon l'une quelconque des revendications précédentes, dans laquelle les pigments opacifiants sont blancs.

5. Composition de revêtement selon l'une quelconque des revendications précédentes, dans laquelle les sphères creuses polymères comprennent moins de 10% en volume.

6. Composition de revêtement selon l'une quelconque des revendications précédentes, dans laquelle les particules de matière de charge sont choisies dans le groupe constitué du carbonate de calcium et de magnésium, du carbonate de calcium, de la syénite néphélinique et du kaolin.

7. Composition de revêtement selon l'une quelconque des revendications précédentes, dans laquelle le liant polymère a une Tg de Fox calculée allant de -25 à 0°C.

8. Composition de revêtement selon l'une quelconque des revendications précédentes, dans laquelle le liant polymère est dérivé du styrène, de l'acrylate de butyle et de l'acide acrylique.

9. Composition de revêtement selon l'une quelconque des revendications précédentes, dans laquelle le liant comprend 5 à 20% du revêtement séché.

10. Composition de revêtement selon l'une quelconque des revendications précédentes, dans laquelle l'indice d'acide du liant polymère est compris entre 15 et 60 mg de KOH/g de polymère.

11. Composition de revêtement selon l'une quelconque des revendications précédentes, dans laquelle la demande en dispersant est estimée par le procédé suivant ou son équivalent qui consiste ; i) à ajouter progressivement un dispersant à une dispersion aqueuse des particules de matière de charge et de pigment opacifiants non polymères et à surveiller la viscosité du mélange résultant pour déterminer la viscosité minimale ii) à identifier la quantité de dispersant ajouté pour atteindre la viscosité minimale comme étant la demande en dispersant.

12. Composition de revêtement selon l'une quelconque des revendications précédentes, dans laquelle le dispersant est choisi dans le groupe constitué de l'Orotan 731 et de l'Orotan 2002, du Coadis 123k, du Sokolan CP9 et de l'Hydropalat 34.

13. Composition de revêtement selon l'une quelconque des revendications précédentes et contenant en outre des pigments colorés.

14. Composition de revêtement selon l'une quelconque des revendications précédentes et présentant une couleur lorsqu'elle est sèche répondant aux critères

$$C^* < C_{critique}$$

et

$$Y > mC^* + 35$$

lorsqu'ils sont calculés en utilisant m et $C_{critique}$ selon le tableau ci-dessous

| Angle de teinte h* | m | $C_{critique}$ |
|---|---|---|
| 0 | 0,098 | 39,063 |
| 10 | 0,063 | 42,739 |
| 20 | 0,231 | 40,130 |
| 30 | 0,399 | 37,522 |
| 40 | 0,498 | 37,444 |
| 50 | 0,579 | 38,000 |
| 60 | 0,655 | 39,500 |
| 70 | 0,732 | 41,000 |
| 80 | 0,793 | 45,286 |
| 90 | 0,854 | 49,571 |
| 100 | 0,803 | 47,136 |
| 110 | 0,740 | 43,955 |
| 120 | 0,663 | 41,727 |
| 130 | 0,580 | 39,909 |
| 140 | 0,498 | 38,565 |
| 150 | 0,416 | 37,696 |
| 160 | 0,346 | 37,381 |
| 170 | 0,318 | 39,586 |
| 180 | 0,283 | 40,850 |
| 190 | 0,190 | 39,350 |
| 200 | 0,101 | 38,000 |
| 210 | 0,060 | 38,000 |
| 220 | 0,021 | 38,333 |
| 230 | -0,007 | 40,000 |
| 240 | -0,041 | 40,314 |
| 250 | -0,083 | 38,600 |
| 260 | -0,125 | 36,886 |
| 270 | -0,167 | 35,171 |
| 280 | -0,152 | 34,640 |
| 290 | -0,131 | 34,240 |
| 300 | -0,079 | 34,000 |
| 310 | 0,016 | 34,000 |
| 320 | 0,112 | 34,000 |
| 330 | 0,207 | 34,000 |
| 340 | 0,235 | 34,471 |
| 350 | 0,161 | 35,647 |
| 360 | 0,098 | 39,063 |

**15.** Composition de revêtement selon l'une quelconque des revendications précédentes et ayant un brillant inférieur à 15% lorsqu'il est mesuré à 85°C.

**16.** Procédé de revêtement d'un article ou d'une structure ayant une surface avec une composition telle que définie dans l'une quelconque des revendications précédentes comportant les étapes qui consistent à appliquer au moins une couche liquide du revêtement par une brosse, un rouleau, un tampon ou un atomiseur ; à permettre ou à amener la couche à sécher et/ou à durcir.

**17.** Article ou structure ayant une surface revêtue d'une composition telle que définie dans l'une quelconque des revendications 1 à 15.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4277385 A

- EP 0113435 A

**Non-patent literature cited in the description**

- **R.LAMBOURNE.** Paint and Surface Coatings - theory and practice. John Wiley and Sons, 35-37

- International Lighting Vocabulary. IEC/CIE, 1987